# EUROPEAN PATENT APPLICATION

(11) **EP 1 437 603 A2**
(43) Date of publication of application: **14.07.2004**
(21) Application number: 04002921.7
(22) Date of filing: 28.11.2001
(51) Int. Cl.: G01S 5/00, H04Q 7/38

(54) **A positioning unit for locating a mobile device in a cell-based mobile network**

(62) Divisional of application: 01128259.7
(71) Applicant: Sony International (Europe) GmbH, 10785 Berlin (DE)
(72) Inventor: Hohl, Fritz, c/o Sony International (Europe) GmbH, 70327 Stuttgart (DE); Kovacs, Ernö, c/o Sony International (Europe) GmbH, 70327 Stuttgart (DE); Seybold, Christian, c/o Sony Int. (Europe) GmbH, 70327 Stuttgart (DE)
(74) Representative: Rupp, Christian, Dipl.Phys.

(57) **Abstract**

The underlying invention generally relates to the field of wireless communication systems with high-speed mobile access, especially to a positioning system (200) that allows to locate the current position of mobile devices (106) in a cell-based mobile network (100) connected to a fixed network (e.g. the Internet) by taking into account data measured by said mobile devices (106) and/or other sources of data. For this purpose, nine different positioning algorithms (302) can be applied.

According to an embodiment of the underlying invention, at least one stationary sensing unit (204) is applied to compensate signal fluctuations impairing the local reception situation at the mobile device (106) by using a delta approach. Thereby, at least one stationary mobile terminal (106) measures the same position data as the mobile device (106) that shall be located, and computes the difference between the position data it receives and the position data it should receive. Finally, it transmits this difference to said mobile device (106).

## Description

### FIELD AND BACKGROUND OF THE INVENTION

The underlying invention generally relates to the field of wireless communication systems with high-speed mobile access, especially to a positioning system that allows to locate the current position of mobile devices within a cell-based mobile network connected to a fixed network (e.g. the Internet) by taking into account data measured by said mobile devices and/or other sources of data.

For many emerging areas with promising commercial prospects like location-based services (LBS), ubiquitous computing (UC) applications, or location- and context-aware systems, it is essential to determine the geographic position of a mobile device carried by a user.

Currently in development, numerous geolocation technologies can pinpoint a person's or object's position on the Earth. Thereby, knowledge of the spatial distribution of wireless callers will facilitate the planning, design, and operation of next-generation broadband wireless networks. Mobile users will gain the ability to get local traffic information and detailed directions to gas stations, restaurants, hotels, and other services. Police and rescue teams will be able to quickly and precisely locate people who are lost or injured but can not give their precise location. Companies will use geolocation-based applications to track personnel, vehicles, and other assets.

The driving force behind the development of said geolocation technologies is an US Federal Communications Commission (FCC) mandate stating that since October 2001 all wireless carriers must provide the geolocation of an emergency (911) caller to the appropriate public safety answering point. Location technologies requiring new, modified or upgraded mobile stations must be able to determine the caller's longitude and latitude within 50 m for 67 % of incoming emergency calls, and within 150 m for 95 % of these calls. Otherwise, they must be able to do so within 100 m and 300 m, respectively, for the same percentage of calls. By contrast, currently deployed wireless technology is not able to locate emergency calls within an area smaller than 10 to 15 km².

### BRIEF DESCRIPTION OF THE PRESENT STATE OF THE ART

According to the state of the art, different positioning technologies are currently available, which are closely related to the topic of the underlying invention. In order to understand the context of the invention, it is necessary to briefly explain the main features involved with said technologies.

An obvious way to satisfy the FCC requirement is to incorporate Global Positioning System (GPS) receivers into mobile phones. GPS was developed by the US Department of Defense as a worldwide all-weather navigation, positioning and timing resource, mainly for military use. It is based on a constellation of 24 satellites orbiting the earth, equally spaced in six orbital planes 20,200 km above the Earth. They transmit two specially coded carrier signals: L1 frequency for civilian use, and L2 for military and government use. Today, GPS has become an ubiquitous tool for situations where a quick measurement of geodetic positions is required. Examples range from tracking moving objects to establishing the exact location of physical assets. Current GPS equipment is small and reasonably priced and is finding its way into new applications every day.

To further enhance the accuracy of GPS, the Differential Global Positioning System (DGPS) was designed. In this context, users apply mobile GPS devices are applied by users who want to determine their current position, and GPS receivers which continuously monitor GPS errors are set up on stationary reference stations at known positions. Thereby, differences between measured and calculated distances to the satellites are continuously determined by the stationary GPS receivers. The resulting differences are then transmitted to the mobile GPS devices that use these differences to correct their received position. This method provides the user with an increased accuracy in the range of 1 to 10 m, depending on the quality of the GPS receiver. The transmission of said differences can be performed via radio transmission, GSM, Radio Data System (RDS) services, or the Internet.

The whole mechanism works the more accurate the closer the mobile and the stationary receivers are (and the more exact the stationary receivers work). Therefore, a network of stationary GPS receivers is needed to cover a certain area.

In the European patent application 00 125 016.6 a cooperative system of participants with different positioning abilities being able to communicate over a network is disclosed. Whereas this system employs stationary positioning systems (e.g. a stationary DGPS receiver) and mobile positioning systems, the mobile positioning systems use a relative positioning that seems to take only the relative position to other participants into account. The main idea to relate the different location information is to either select the most exact position measured by other near-by participants or by using the position (e.g. measured by DGPS) and to add a relative positioning vector.

### TECHNICAL PROBLEMS OF THE PRIOR ART

Despite several advantages, the approaches mentioned above encompass a plurality of drawbacks, which shall be described in the following sections.

GPS and DGPS are for free and can be used by rather inexpensive devices. However, the involved technologies do not work indoors. Additionally, the integration of GPS into existing devices decreases battery life and increases the price significantly. Finally, DGPS (allowing an higher accuracy than GPS) is not standardized concerning the way a delta signal is transported to the mobile terminal.

The cooperative positioning system proposed in the European patent application 00 125 016.6 uses a new relative positioning mechanism that has to be developed. Moreover, it requires new hardware components.

### OBJECT OF THE UNDERLYING INVENTION

In view of the explanations mentioned above it is the object of the invention to propose a new positioning system which allows to locate the position of mobile devices in a cell-based mobile network environment both indoors and outdoors by taking into account data measured by said mobile devices and other sources of data without needing a special equipment inside of buildings.

This object is achieved by means of the features of the independent claims. Advantageous features are defined in the dependent claims.

### SUMMARY OF THE INVENTION

The underlying invention describes a solution for a positioning system that allows to locate the position of mobile devices in a cell-based mobile network by taking into account data measured by said mobile devices and other sources of data.

The positioning mechanism uses two primary sources of data. First, network data measured by a mobile device is taken into account. Second, parts of the CDB are used, which describes a plurality of network characteristics. The result is the current position of the mobile device.

The positioning algorithm (PA) aims at reducing the error area (i.e. the possible area in which the mobile device is located) by taking into account the cell area (which is state-of-the art) and the reception levels of several channels of the received cells at this position.

Furthermore, the fluctuations of the received signal of these channels as well as the local reception situation (which stems from various effects such as attenuation by walls, reflection by walls, etc.) are compensated by using a delta approach similar to the one used in DGPS. For this purpose, stationary mobile phones (SMPs) measure the same channels as the mobile device that shall be located. As the SMPs 106 know their position, they are able to compute the difference between the values they receive and the ones they should receive. This difference is transmitted to the mobile device that shall be located, and is taken into account to compensate the above-mentioned effects.

### BRIEF DESCRIPTION OF THE CLAIMS

The independent claim 1 and the dependent claims 2 to 13 refer to a positioning system of a stationary mobile device located in a cell-based mobile network which allows to locate the current position of said stationary mobile device.

According to an embodiment of the underlying invention, at least one stationary sensing unit is applied to compensate signal fluctuations impairing the local reception situation at the mobile device by using a delta approach. Thereby, at least one stationary mobile terminal measures the same position data as the mobile device that shall be located, and computes the difference between the position data it receives and the position data it should receive. Finally, it transmits this difference to said mobile device.

Besides, the dependent claims 14 to 17 pertain to different methods for supporting a positioning system according to anyone of the claims 1 to 13.

Finally, the dependent claims 18 and 19 are directed to a mobile communication device, in which a positioning system according to anyone of the claims 1 to 13 and different methods for supporting said positioning system according to anyone of the claims 14 to 17 are applied.

### BRIEF DESCRIPTION OF THE DRAWINGS

Further advantages and possible applications of the underlying invention result from the subordinate claims as well as from the following description of two preferred embodiments of the invention which are depicted in the following drawings. Herein,
- Fig. 1: shows a cell-based mobile network modeled as a cluster of seven hexagonal radio cells consisting of cellular mobile devices, wherein each radio cell comprises one cell antenna,
- Fig. 2: presents a block diagram of a positioning system for said cellular system showing a positioning unit (PU) and components communicating with said positioning unit according to an embodiment of the underlying invention,
- Fig. 3a: presents a modified block diagram of said positioning system 200 showing said positioning unit 202 (PU) and components communicating with said positioning unit 202 according to an embodiment of the underlying invention,
- Fig. 3b: exhibits an overall flowchart of said positioning algorithm (PA) performed in said positioning unit (PU) according to an embodiment of the underlying invention,
- Fig. 4: exhibits a flowchart showing a positioning algorithm (PA), in which cell disk segment stripes or slices are obtained from different reception levels, and two diagrams explaining said flowchart,
- FIG. 5: exhibits a flowchart showing a positioning algorithm (PA) which performs an intersection of cell disk segments (ICS), and one diagram explaining said flow-chart,
- Fig. 6: exhibits a flowchart showing a positioning algorithm (PA) which performs an intersection of striped cell disk segments (ISCS), and one diagram explaining said flowchart,
- Fig. 7: exhibits a flowchart showing a positioning algorithm (PA) which performs an intersection of partially striped cell disk segments (IPSCS), and one diagram explaining said flowchart,
- Fig. 8: exhibits a flowchart showing a positioning algorithm (PA) which performs an intersection of cell disk rings (IR), and one diagram explaining said flowchart,
- Fig. 9: exhibits a flowchart showing a positioning algorithm (PA) which performs an intersection of cell disk rings with cell disk segments (IRCS), and one diagram explaining said flowchart,
- Fig. 10: exhibits a flowchart showing a positioning algorithm (PA) which performs an intersection of a serving cell disk segment with a circle around a triangulated position (ICC), and one diagram explaining said flowchart,
- Fig. 11: exhibits a flowchart showing a positioning algorithm (PA) which performs an intersection of a (striped) serving cell disk segment with a circle around a triangulated position (ISSCC), and one diagram explaining said flowchart,
- Fig. 12: exhibits a flowchart showing a positioning algorithm (PA) which performs an intersection of a cell disk ring with a circle around a triangulated position (ICRC), and one diagram explaining said flowchart, and
- Fig. 13: illustrates five possible roles of the involved components and the exchanged data between said components in a business model based on an embodiment of the underlying invention.

### DETAILED DESCRIPTION OF THE UNDERLYING INVENTION

The context of said positioning system is given by a mobile network environment comprising a plurality of cell-based mobile networks. An example of a cell-based mobile network is modeled as a cluster of seven hexagonal radio cells consisting of cellular mobile devices. Thereby, each radio cell comprises one cell antenna.

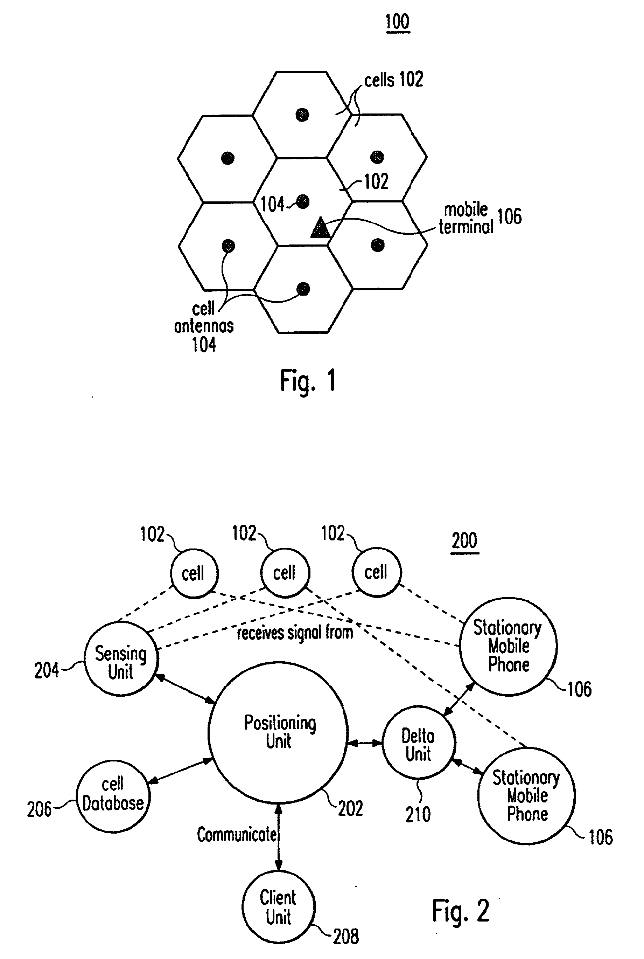

Fig. 2 exhibits a block diagram of a positioning system 200 which can be applied to a cellular system 100. It comprises a positioning unit 202 (PU) and several components communicating with said PU 202 such as a sensing unit 204 (SU), a cell database 206 (CDB), a client unit 208 (CU) and a delta unit 210 (DU).

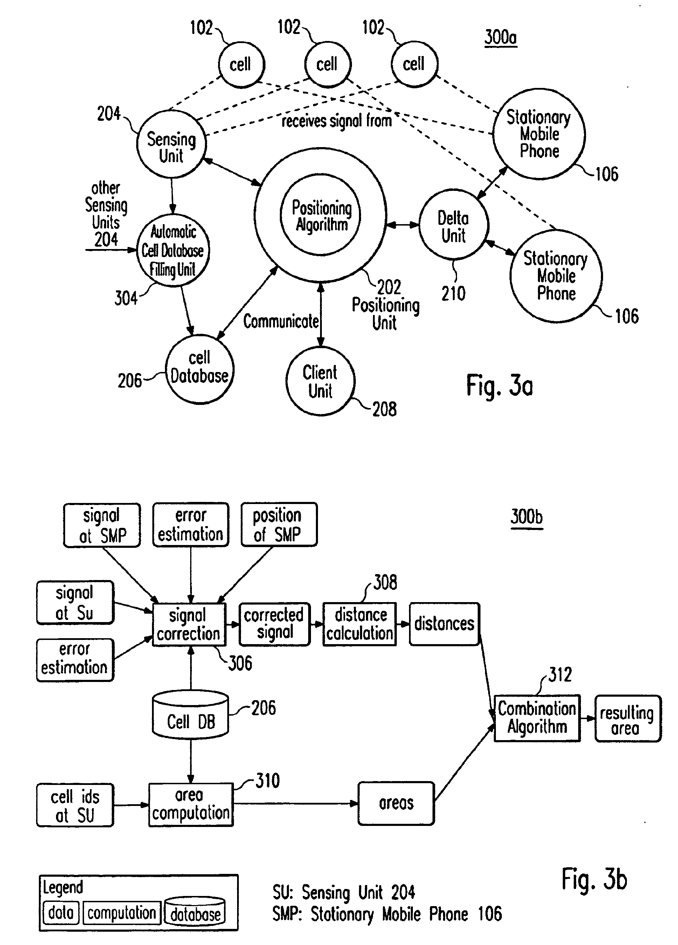

In the following, the functions of the structures contained in an embodiment of the underlying invention as depicted in Figs. 3a to 13 are explained in detail. According to said embodiment, a mobile network environment is used wherein the GSM standard is applied.

Often, mobile networks 100 consist of single cells 102. In this context, a cell 102 is either the logical unit to which mobile devices 106 can be connected (e.g. in order to make a call) or the geographical area where calls to this special cell 102 are received. Finally, a cell 102 is sometimes associated with the cell antenna 104 used by this cell 102.

A mobile device 106 is able to receive signals from a number of different cells 102. There are channels for these cells 102 which send signals with a constant power. As the mobile device 106 is able to measure the received power, it then knows the difference in power between the sent and the received signal.

A modified block diagram of the positioning system 200 showing the positioning unit 202 (PU) and the components 204, 206, 208 and 210 communicating with said PU 202 according to an embodiment of the underlying invention can be taken from Fig. 3a.
- Sensing Unit (SU): The SU 204 measures mobile network data received from some cells 102 of the mobile network 100. It sends these data to the PU 202. In the GSM case, such data can include the cell identity (CI) of the serving cell 102 and its Broadcast Control Channel (BCCH), a list of neighbored cells 102 and their BCCHs, and the reception levels of these BCCHs. As the SU 204, a normal mobile device 106 can be used that measures these values and returns them via a data connection.
- Cell Database (CDB): To calculate the position, the positioning system 200 uses a CDB 206 that contains various data about the used GSM network 100, e.g. the CI of a cell 102, the geographic area where the cell 102 is located, the geographic location of the cell antennas 104 in the mobile network 100, the transmitter power of the cell antennas 104, etc. There might be entries for different cells 102, belonging to different mobile networks 100. The PU 202 can access the CDB, especially those parts that relate to the received cells 102. In the GSM case, often the CI of these cells 102 is needed. The problem is that this information can only be sensed for the serving cell 102, not the neighboring cells 102. By using a CDB 206, this problem can be solved by comparing the BCCH value, the Network Color Code (NCC), and the Base Station Color Code (BSCC) of a neighboring cell 102 to find the corresponding database entry, and then to retrieve the corresponding CI. This can only be done either in the context of a certain serving cell 102 or by taking the Mobile Country Code (MCC), the Mobile Network Code (MNC), and the Location Area Code (LAC) also into account. If the context of a certain cell 102 is used, the corresponding CI can be found when considering the possible neighbors of the serving cell 102.
- Automatic Cell Database Filling Unit (ACDBFU): There are different possibilities to fill and maintain the entries of the CDB 206. For example, the data can be provided by the network operator. Another possibility is to automatically sense the needed data using data measured by the SUs 204. If the CI and the BCCH of a number of cells 102 is needed (e.g. in the GSM case), these data can be found if a mobile device 106 is in the corresponding cells 102 and uses them as a serving cell 102. As the users move through the network 100, most entry types can be checked, and updated, respectively. Other entry types can be computed by using the data from a number of SUs 204. For example, if the geographic position of a cell antenna 104 is needed, this position can be computed by triangulating the BCCH signals.
- Delta Unit (DU): The DU 210 requests the measured mobile network data and the known geographic position from at least one SMP 106 in the current vicinity of the SU 204 and returns them to the PU 202. Thereby, the measured mobile network data are of the same type as the one measured by the SU 204.
- Client Unit (CU): The CU 208 is the one that requests the position of the SU 204 from the positioning unit 202 (PU).
- Positioning Unit (PU): The PU 202 computes the position of the SU 204 by taking into account the data from the SU 204 and from the CDB 206, thereby using exchangeable positioning algorithms 302 (PA). The PU extends the accuracy of this position by taking the data from the DU 210 into account. As a result, the position of the SU 204 is given to the CU 208.
- Positioning Algorithm (PA): There are a number of different PAs 302 that can he used. Apart from existing ones (e.g. using the CGI or the E-CGI approach), new PAs are applied that will be described below. These PAs use the geographic area covered by the serving cell 102, and reduce this area by taking into account other measured mobile network data.

Apart from the concrete algorithms, three general principles can be applied to the process of finding the location of a mobile device 106 by taking into account measured cell data, which shall now be explained:
- Cells 102, whose signals are received at a too extreme level, are not regarded: Signals of cells 102 that have a maximum or minimum level, often have a stronger or weaker signal, respectively, than values which can be indicated. Therefore, such values are not taken into account when considering the reception levels of cells 102.
- Intersecting new and old position areas: If a new positioning attempt is made and a new area is computed that contains the position of a mobile device 106, this area can be reduced in some situations by intersecting said area with the one computed in the last positioning attempt.
- Usage of cell data of more than one mobile network 100: Normally, there is more than one mobile network 100 at one place. To complete the usage of cell data of one mobile network 100, cell data of other mobile networks 100 can additionally be used.

An overall flowchart 300b of said PA 302 performed in said PU 202 according to an embodiment of the underlying invention can be taken from Fig. 3b.

Thereby, the SU 204 senses the CIs of the received cells 102. This information is then used by an area computation 310 to compute the areas covered by these cells 102 using the CDB 206. The SU 204 additionally senses the strength of the received signals and performs an error estimation (which might either be constant or dynamic according to the measurements).

The SMPs 106 which receive signals from the same cells 102 also measure the strength of the received signals. These data, together with another error estimation and the (constant) position of the SMP 106 is fed into a signal correction computation 306 that also uses the measured signal strength values and the error estimation from the SU. These input data are then used to compute a corrected signal that contains less errors (e.g. caused by signal fluctuation).

This corrected signal is then applied to compute one or two distances per received cell signal, one upper bound and one lower bound. The combination algorithm 312 takes the areas covered by the received cells 102 and the distances and finally computes the resulting area 506b, i.e. the area in which the respective user is located.

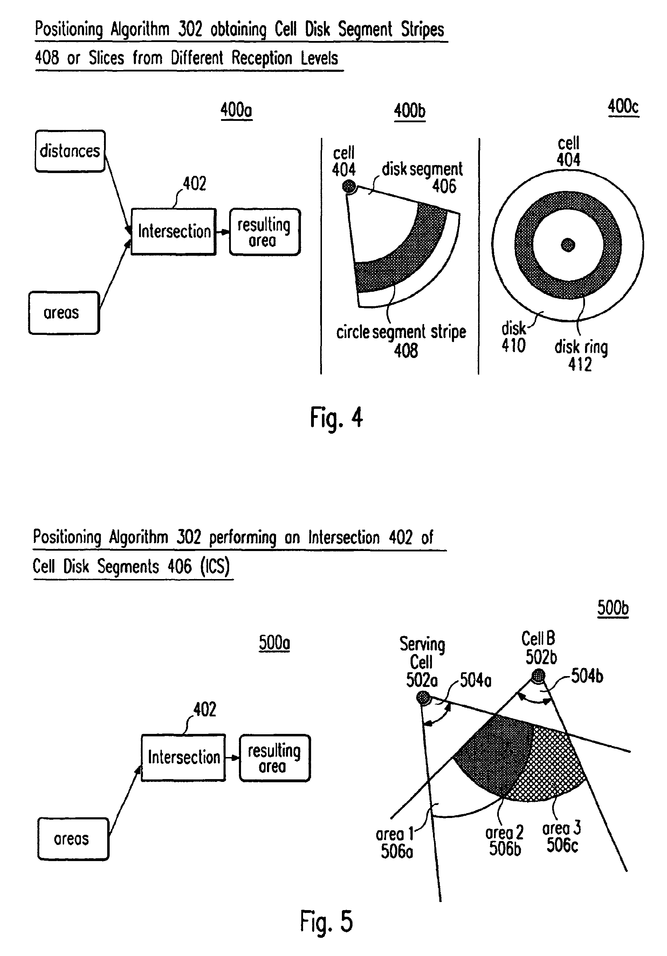

In the following, nine PAs 302 with different combination algorithms 312 as depicted in Figs. 4 to 12 which can be applied to the positioning system 200 according to an embodiment of the underlying invention shall be explained in detail.

Fig. 4 exhibits a flowchart 400a showing a positioning algorithm 302 (PA) which obtains cell disk segment stripes 408 or slices from different reception levels, and two diagrams 400b+c explaining said flowchart 400a.

If the spatial object covered by a circular mobile network cell 404 is a cell disk segment 406, the reception levels of the channels, that always send with the same power of a corresponding cell antenna 104, establish a stripe 408 inside this cell disk segment 406. The thickness of this stripe 408 results from a computation of the distance to the cell antenna 104, which yields a cell disk ring 412 or a segment thereof, and other influence factors like the size of the reception levels, or an error estimation.

This is achieved similar to the way how Timing Advance (TA) values in GSM networks 100 establish a stripe 408 in a disk segment formed cell 404. If the cell antenna 104 covers a full cell disk 410, the reception level forms a cell disk ring 412 of some thickness.

It should be noted that said approach can be applied both to the 2D and the 3D case. If the 3D case is considered, the reception levels form hollow spheres or sphere segments. By using this approach, the 2D or 3D area where a device is located can significantly be reduced, which is similar to the Timing Advance (TA) approach applied to GSM networks 100.

Though, the reception level of the serving cell 404 is used to compute the reduced structure instead.

Fig. 5 illustrates a flowchart 500a showing a positioning algorithm 302 (PA) which performs an intersection 402 of cell disk segments 406 (ICS) covered by the received cells 502a+b, and one diagram 500b explaining said flowchart 500a.

As depicted in Fig. 5, there is one serving cell 502a and one neighboring cell 502b which is also received. Thereby, the sides of two cell disk segments 406 (here: 506a and 506c) both intersect the sides of the other cell disk segment 506a and 506c, respectively. Consequently, three different areas can be distinguished:
- Area 2 results from intersecting the cell disk segments 506a and 506c of the cells 502a+b with each other,
- area 1 results from intersecting cell disk segment 506a of the serving cell 502a with the area spanned by the azimuthal cell angle 504b of the neighboring cell 502b without area 2, and
- area 3 results from intersecting cell disk segment 506c of the neighboring cell 502b with the area spanned by the azimuthal cell angle 504a of the serving cell 502a without area 2.

If the user is currently served by the serving cell 502a, but is able to receive the neighboring cell 502b, the area where the user is located consists of area 1 and area 2. If the serving cell 502a is switched to the neighboring cell 502b, and the old serving cell 502a is still received, the user is located in area 2 for some time. After a certain period, this area extends to area 2 plus area 3.

It should be noted that said approach can be extended to more cells 404 if the resulting area 506b is smaller than the one without the additional cells 404. Moreover, said approach can also be extended to the 3D case.

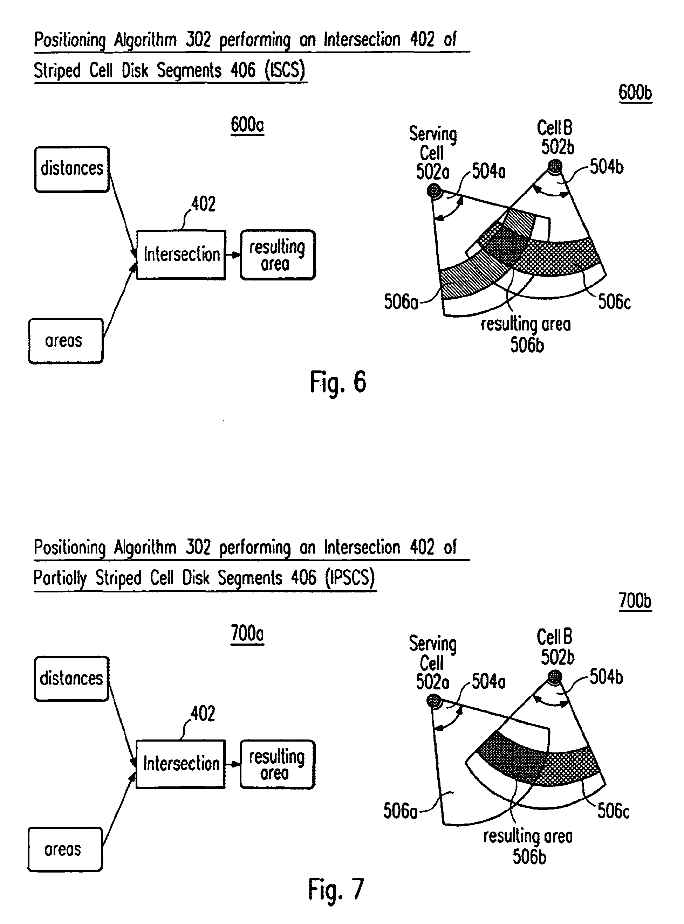

Fig. 6 exhibits a flowchart 600a showing a positioning algorithm 302 (PA) which performs an intersection 402 of striped cell disk segments 406 (ISCS), and one diagram 600b explaining said flowchart 600a.

This approach works similar to the ICS approach described above. Since reception levels are applied in addition to the cell disk segments 406, cell disk segment stripes 408 (here: 506a+c) are intersected. The area where the user is located is the intersection area 506b of these two cell disk segment stripes 506a+c.

It should be noted that said approach can be extended to more cells 404 if the resulting area 506b is smaller than the one without the additional cells 404. Moreover, said approach can also be extended to the 3D case.

Fig. 7 illustrates a flowchart 700a showing a positioning algorithm 302 (PA) which performs an intersection 402 of partially striped cell disk segments 406 (IPSCS), and one diagram 700b explaining said flowchart 700a.

This approach is a mixture of the ICS and the ISCS approach described above. Thereby, one cell disk segment 406 (here: 506a) is intersected with a cell disk segment stripe 408 (here: 506c) that results from the reception level of a neighboring cell 502b. The area where the user is located is the intersection area 506b.

It should be noted that this approach can be extended to more cells 404 if the resulting area 506b is smaller than the one without the additional cells 404. Moreover, said approach can also be extended to the 3D case.

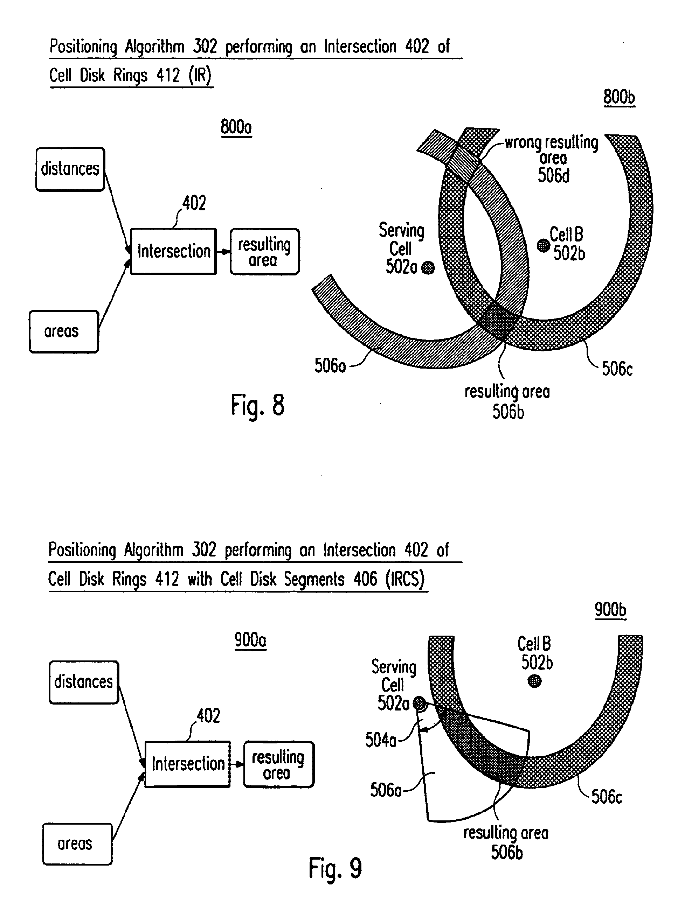

Fig. 8 illustrates a flowchart 800a showing a positioning algorithm 302 (PA) which performs an intersection 402 of cell disk rings 412 (IR), and one diagram 800b explaining said flowchart 800a.

This approach works similar to the ISCS approach, but it uses only the cell disk rings 412 that result from the reception levels and not from the cell disk segments 406. Intersecting the cell disk rings 412 (here: 506a+c) of cells 502a+b yields two possible intersection areas 506b+d. The right one is found by taking the main beam direction of the cell antennas 104 into account. If both cell antennas 104 are 360-degree antennas, both areas 506b+d are valid. In this case, the area where the user is located is the valid intersection area 506b, or both valid intersection areas 506b+d.

It should be noted that this approach can he extended to more cells 404 if the resulting area 506b is smaller than the one without the additional cells 404. If still two areas 506b+d are valid, taking another cell 404 into account might reduce the amount of valid intersection areas 506b+d to one. Moreover, said approach can also be extended to the 3D case.

Fig. 9 exhibits a flowchart 900a showing a positioning algorithm 302 (PA) which performs an intersection 402 of cell disk rings 412 with cell disk segments 406 (IRCS), and one diagram 900b explaining said flowchart 900a.

In this approach, the cell disk segment 406 (here: 506a) of the serving cell 502a is intersected with a cell disk ring 412 (here: 506c) that results from the reception level of the neighboring cell 502b. The area where the user is located is the intersection area 506b.

It should be noted that this approach can be extended to more cells 404 if the resulting area 506b is smaller than the one without the additional cells 404. Moreover, said approach can also be extended to the 3D case.

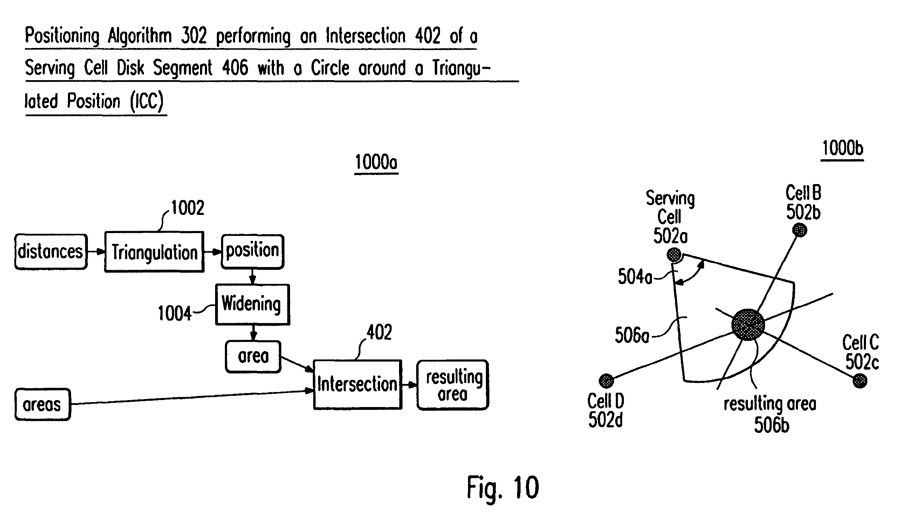

Fig. 10 exhibits a flowchart 1000a showing a positioning algorithm 302 (PA) which performs an intersection 402 of a serving cell disk segment 406 with a circle around a triangulated position (ICC), and one diagram 1000b explaining said flowchart 1000a.

In this approach, the cell disk segment 406 (here: 506a) of the serving cell 502a is intersected with a circle around the triangulated position of the mobile device 106. The triangulated position of the mobile device 106 is computed by means of the reception levels to the neighboring cells 502b-d as described in [4]. The size of the circle denotes the expected error of the triangulation. The area where the user is located is the intersection area 506b of that circle with the cell disk segment 506a of the serving cell 502a. Thereby, said approach can also be extended to the 3D case.

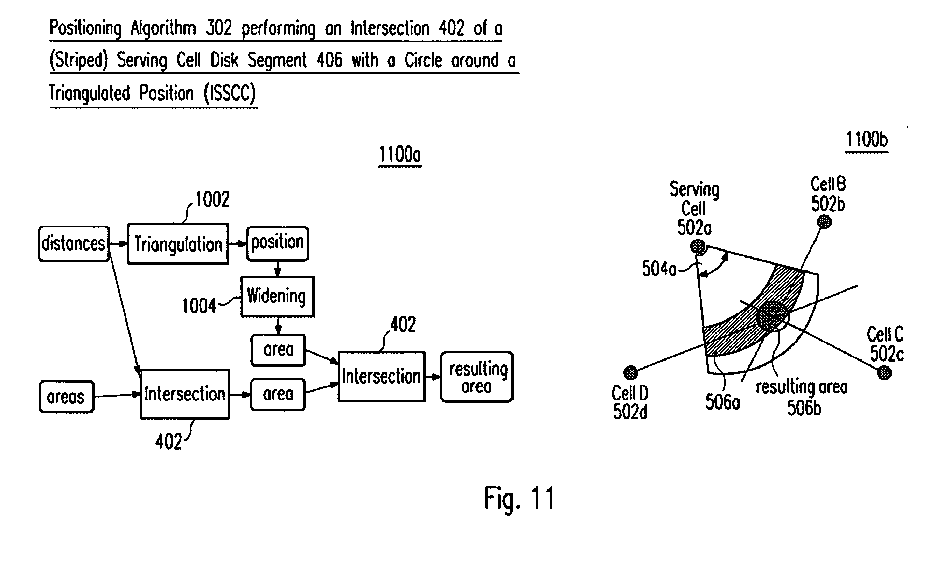

Fig. 11 presents a flowchart 1100a showing a positioning algorithm 302 (PA) which performs an intersection 402 of a striped serving cell disk segment 406 with a circle around a triangulated position (ISSCC), and one diagram 1100b explaining said flowchart 1100a.

In this approach, the cell disk segment stripe 408 (here: 506a) of the serving cell 502a is intersected with a circle around the triangulated position of the mobile device 106. The triangulated position of the mobile device 106 is computed by using the reception levels to the neighboring cells 502b-d as described in [1]. The size of the circle denotes the expected error of the triangulation. The area where the user is located is the intersection area 506b of that circle with the cell disk segment stripe 506a of the serving cell 502a. Thereby, said approach can also be extended to the 3D case.

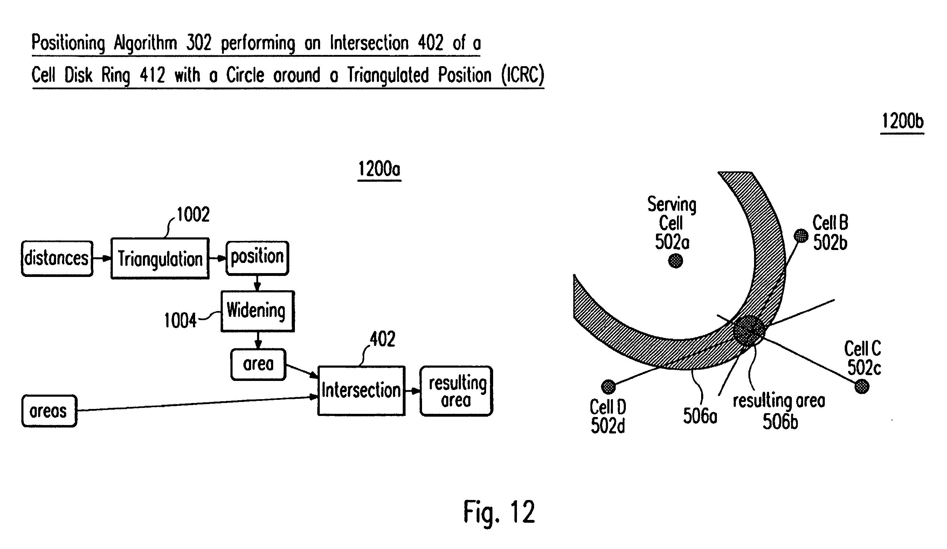

Fig. 12 presents a flowchart 1200a showing a positioning algorithm 302 (PA) which performs an intersection 402 of a cell disk ring 412 with a circle around a triangulated position (ICRC), and one diagram 1200b which is used for an explanation of said flowchart 1200a.

In this approach, the cell disk ring 412 (here: 506a) obtained by taking into account the reception level of the serving cell 502a is intersected with a circle around the triangulated position of the mobile device 106. The triangulated position of the mobile device 106 is computed using the reception levels to the neighboring cells 502b-d as described in [1]. The size of the circle denotes the expected error of the triangulation. The area where the user is located is the intersection area 506b of that circle with the cell disk ring 506a of the serving cell 502a. Thereby, said approach can also be extended to the 3D case.

In the following, the data flow between the radio cells 404, the SMPs 106 and the components 202, 204, 206, 208 and 210 of the positioning system 200 shall be explained in detail:
- When the user moves or the signal fluctuates, the measured cell data changes. If the signal changes result from user movements, the SU 204 recognizes the change. If the signal changes result from signal fluctuations, the SU 204 and the corresponding SMPs 106 recognize the change.
- When SMPs 106 measure a changed signal, the data is finally sent to the DU 210, which in turn sends the measured cell data to the PU 202.
- When a SU 204 measures a changed signal, the measured cell data is finally sent to the PU 202, and, if needed, to the ACDBFU 304.
- When the PU 202 computes a position, it takes into account also the measured cell data from the SU 204 and from the DU 210. Signal fluctuations can be compensated as they occur both at the SU 204 and at the DU 210. Changes, in the measured cell data then result in a corresponding change in the computed position.
- The CU 208 connects to the PU 202 and requests the actual position of the SU 204. If the CU 208 is allowed to access the position and if a position exists, the PU 202 returns the position to the CU 208.
- If no position for this SU 204 exists, but the CU 208 is authorized to access the position, and all components that are needed to deliver data can be accessed, the PU 202 can choose to contact some component to get the needed data and then starts the area computation process 310. Finally, the position can be delivered to the CU 208.

In the following, the data structures of the CDB 206 shall briefly be described. The CDB 206 contains data about the mobile network 100. In the GSM case, the corresponding entries can be taken from Table 1. Furthermore, there might be entries for different cells 404, belonging to different mobile networks 100.

**Table 1:**

| Cell entries in a GSM cell database 206 (CDB) | |
|---|---|
| Mobile Country Code (MCC) | Unique country identification. |
| Mobile Network code (MNC) | Unique mobile network identification within a country. |
| Location Area Code (LAC) | Operator dependent part of the Location Area ID (LAI). |
| Cell ID (CI) | Unique Base Transceiver Station (BTS) or cell identification within a location area. Thereby, several cells are grouped to a location area. |
| Network Color Code (NCC) | The first part of the Base Transceiver Station Identity Code (BSIC) serves to distinguish BTSs of network providers of neighboring countries. |
| Base Station Color Code (BCC) | The second part of the BSIC serves to distinguish neighboring BTS of the same network provider within a country. |
| Absolute Radio Frequency Channel Number (ARFCN) | Channel number representing a frequency of a certain channel of a BTS. In this context, the ARFCN always refers to the Broadcast Control Channel (BCCH) of a BTS. Together with the BSIC, the ARFCN is unique within a small area. |
| List of neighboring BTS, each of them identified by the values MCC, MNC, LAC and CI | This list reflects the observable neighboring BTS given in the BCCH list of this BTS. |
| Latitude | Latitude of the location of the BTS in degree (WGS84). |
| Longitude | Longitude of the location of the BTS in degree (WGS84). |
| Altitude | Altitude of the location of the BTS above sea level in meters. |
| Geodetic Datum | Value representing the coding of location values, particularly latitude and longitude. |
| Gauss-Krüger coordinate, right-value | First part of the pair of coordinates transmitted over the broadcast channel 221 by Viag Interkom specifying the right-value. |
| Gauss-Krüger coordinate, height-value | Second part of the pair of coordinates transmitted over the broadcast cannel 221 Viag Interkom specifying the height-value. |
| Transmitter power | Transmitting power of the BTS in Watt without the antenna gain. |
| Gain of the BTS antenna | Gain of the BTS antenna in dBm. |
| Main transmitter direction | Orientation of the antenna, given in degree, starting with 0 degree in the north and turning clockwise. |
| Horizontal opening angle | Opening angle of the transmitter, normally 65 or 90 degrees for cell sectors and 360 degrees for cell circles. |
| Serving Range | Range for receiving this BTS as serving one. |
| Neighbor Range | Range for receiving this BTS as neigh-boring one. |
| Description | Description of the BTS location. |
| Remark | Additional remarks. |
| Validity From | Data since when this record is valid. |
| Validity To | Date until when this record is valid. |

In the following, a brief explanation of technical details shall be given including information about access to information which may change dynamically, and different security and privacy aspects.

If one component needs access to dynamically changing data of another component, always two ways of accessing this data are possible. First, the data can be accessed by requesting it by the component that needs the data (pull case). Second, the component that offers this data can inform interested components when changes in the data occur (push case).

The position of a mobile user (which is often equal to the location of his/her mobile device 106) is security-sensitive data. Therefore, this data has to be protected
- if there are other parties aside from that of the mobile user that would be able to access the position of the mobile device 106 or data which can be used to compute its position, or
- if an insecure network 100 is used to transfer the position of the mobile device 106 or data which can be used to compute its position.

To control the first case, a secure access control system has to be used that allows the user to control the parties that may know the position. For this reason, the mobile user or other authorized parties have to be able to specify the authorized parties. Then, the components that offer access to this data have to ensure that these restrictions are applied.

To control the second case, transported data needs to be encrypted in such a way that no unauthorized party is able to read this data. For example, this can be done by applying an asymmetric encryption. Thereby, said data is encrypted with the public key of an authorized receiver.

The main advantageous differences between the proposed solution according to the underlying invention and the state of the art can be summarized as follows:
- The invention applies stationary SUs 204 to compensate signal fluctuations and the local reception situation (delta approach).
- The invention uses both for the 2D and 3D case nine different PAs 302.
- The invention offers a method to automatically determine values of the CDB 206.
- Cells 404 whose signal is received at a too high level are not regarded.
- For determining location areas, the last area is intersected with the new area if the resulting area 506b is smaller than the new one.
- The invention offers a method for GSM to determine the CI of neighbored cells 404 out of the received Broadcast Control Channel (BCCH) and other data.

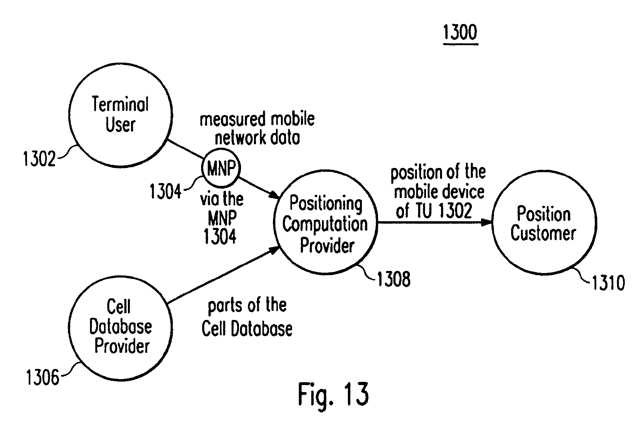

In the following, the roles involved in the process of possible business models that can be applied to the described positioning system 200 according to an embodiment of the underlying invention as depicted in Fig. 13 shall be explained.

Thereby, it shall be assumed that a party is an entity that is able to sell another party some service or information.

In general, five possible roles involved in said process can be distinguished:
- Terminal Users (TUs): TUs 1302 own the mobile devices 106 and are thus able to measure mobile network data. It is the position of their mobile devices 106 that shall be determined.
- Cell Database Providers (CDPs): CDPs 1306 are able to provide the CDB 206 that positioning computation providers 1308 (PCPs) need to compute a position. This CDB 206 is normally stable for some months, afterwards it has to be updated.
- Positioning Computation Providers (PCPs): PCPs 1308 are able to compute the position of the TUs 1302 mobile device 106 by taking into account the mobile network data measured by TUs 1302 and some parts of the CDB 206 of CDPs 1306. The computed positions are then delivered to PCs 1310.
- Position Customer (PC): The PC 1310 is the role that is interested in the position of the mobile devices 106 of the TU 1302. Sometimes, the TU 1302 is also the PC 1310, but it is also possible that there is a distinct role that wants to know the position of the TU 1302 (e.g. a friend of the TU 1302, or another service provider that wants to provide a location-based service to the TU 1302).
- Mobile Network Provider (MNP): The MNP 1304 is the role that is able to transmit data between the TU 1302 and the other roles.

The significance of the symbols designated with reference signs in the Figs. 1 to 13 can be taken from the appended table of reference signs (Table 3).

**Table 2:**

| References | |
|---|---|
| No. | Publication |
| [1] | Brendan Ludden: "Location Technology Slides of a Talk". |
| | http://www.locationforum.org/About_LIF/Documents/0106- |
| | Location_Technology_MLS.ppt. [Last accessed: 08/01/2001] |

**Table 3:**

| Depicted Features and their Corresponding Reference Signs | | |
|---|---|---|
| No. | Feature | |
| 100 | cell-based mobile network 100 modeled as a cluster of seven hexagonal radio cells 102 consisting of cellular mobile devices 106, wherein each radio cell 102 comprises one cell antenna 104 | |
| 102 | hexagonal model of a radio cell in a cluster of seven adjacent radio cells 102 of said cell-based mobile network 100 | |
| 104 | cell antennas of said radio cells 102 | |
| 106 | stationary mobile phone (SMP) or another stationary mobile device located in a radio cell 102 | |
| 200 | block diagram of a positioning system for said cellular system 100 showing a positioning unit 202 (PU) and components communicating with said positioning unit 202 according to the underlying invention | |
| 202 | positioning unit (PU) of said cellular system 100 | |
| 204 | sensing unit (SU) of said cellular system 100 | |
| 206 | cell database (CDB) of said cellular system 100 | |
| 208 | client unit (CU) of said cellular system 100 | |
| 210 | delta unit (DU) of said cellular system 100 | |
| 300a | modified block diagram of said positioning system 200 showing said positioning unit 202 (PU) and components 204, 206, 208 and 210 communicating with said positioning unit 202 according to an embodiment of the underlying invention | |
| 300b | overall flowchart of the positioning algorithm 302 (PA) performed in said positioning unit 202 (PU) according to an embodiment of the underlying invention | |
| 302 | positioning algorithm (PA) performed by means of said positioning unit 202 (PU) | |
| 304 | automatic cell database filling unit (ACDBFU) of said cellular system 100 | |
| 306 | signal correction | |
| 308 | distance calculation | |
| 310 | area computation | |
| 312 | combination algorithm | |
| 400a | flowchart showing a positioning algorithm 302 (PA), in which cell disk segment stripes 408 or slices are obtained from different reception levels | |
| 400b | diagram showing the cell disk segment 406 of a circular radio cell 404 needed for an explanation of said flowchart 400a | |
| 400c | diagram showing the cell disk 410 of said circular radio cell 404 needed for an explanation of said flowchart 400a | |
| 402 | intersection | |
| 404 | circular model of a radio cell of said cell-based mobile network 100 | |
| 406 | cell disk segment of a circular radio cell 404 | |
| 408 | cell disk segment stripe of a circular radio cell 404 | |
| 410 | cell disk of a circular radio cell 404 | |
| 412 | cell disk ring of a circular radio cell 404 | |
| 414 | center of said cell disk 410 | |
| 500a | flowchart showing a positioning algorithm 302 (PA) which performs an intersection 402 of cell disk segments 406 (ICS) | |
| 500b | diagram showing an intersection 402 of cell disk segments 406 (ICS) needed for an explanation of said flowchart 500a | |
| 502a | circular model of a first (serving) radio cell 502a | |
| 502b | circular model of a second (neighboring) radio cell 502b | |
| 502c | circular model of a third (neighboring) radio cell 502c | |
| 502d | circular model of a fourth (neighboring) radio cell 502d | |
| 504a | area spanned by the azimuthal cell angle of the first | |
| | radio cell 502a | |
| 504b | area spanned by the azimuthal cell angle of the second radio cell 502b | |
| 506a | area of the scenario as depicted in diagrams 500b, 600b, | |
| | 700b, 800b, 900b, 1000b, 1100b, 1200b: | |
| | - in Fig. 5: | area 506a = cell disk segment 406 of the |
| | | first radio cell 502a, |
| | - in Fig. 6: | area 506a = cell disk segment stripe 408 |
| | | of the first radio cell 502a, |
| | - in Fig. 7: | area 506a = cell disk segment 406 of the |
| | | first radio cell 502a, |
| | - in Fig. 8: | area 506a = cell disk ring 412 of the |
| | | first radio cell 502a, |
| | - in Fig. 9: | area 506a = cell disk segment 406 of the |
| | | first radio cell 502a, |
| | - in Fig. 10: | area 506a = cell disk segment 406 of the |
| | | first radio cell 502a, |
| | - in Fig. 11: | area 506a = cell disk segment stripe 408 |
| | | of the first radio cell 502a, |
| | - in Fig. 12: | area 506a = cell disk ring 412 of the |
| | | first radio cell 502a |
| 506b | first intersection area (resulting area) of the scenario | |
| | as depicted in diagrams 500b, 600b, 700b, 800b, 900b, | |
| | 1000b, 1100b and 1200b: | |
| | - in Fig. 5: | area 506b = intersection of areas 506a+c, |
| | - in Fig. 6: | area 506b = intersection of areas 506a+c, |
| | - in Fig. 7: | area 506b = intersection of areas 506a+c, |
| | - in Fig. 8: | area 506b = one of two possible intersec- |
| | | tion areas 506b+d of areas 506a+c, |
| | - in Fig. 9: area 506b = intersection of areas 506a+c, | |
| | - in Fig. 10: area 506b = intersection of area 506a | |
| | | with a circle around a position triangu- |
| | | lated from radio cells 502b-d, |
| | - in Fig. 11: | area 506b = intersection of area 506a with |
| | | a circle around a position triangulated |
| | | from radio cells 502b-d, |
| | - in Fig. 12: | area 506b = intersection of area 506a with |
| | | a circle around a position triangulated |
| | | from radio cells 502b-d |
| 506c | area of the scenario as depicted in diagrams 500b, 600b, | |
| | 700b, 800b and 900b: | |
| | - in Fig. 5: | area 506c = cell disk segment 406 of the |
| | | second radio cell 502b, |
| | - in Fig. 6: | area 506c = cell disk segment stripe 408 |
| | | of the second radio cell 502b, |
| | - in Fig. 7: | area 506c = cell disk segment stripe 408 |
| | | of the second radio cell 502b, |
| | - in Fig. 8: | area 506c = cell disk ring 412 of the |
| | | second radio cell 502b, |
| | - in Fig. 9: | area 506c = cell disk ring 412 of the |
| | | second radio cell 502b |
| 506d | second intersection area (wrong resulting area) of the | |
| | scenario depicted in diagram 800b which results from the | |
| | intersection of areas 506a+c | |
| 600a | flowchart showing a positioning algorithm 302 (PA) which | |
| | performs an intersection 402 of striped cell disk segments 406 (ISCS) | |
| 600b | diagram showing an intersection 402 of striped cell disk | |
| | segments 406 (ISCS) needed for an explanation of said | |
| | flowchart 600a | |
| 700a | flowchart showing a positioning algorithm 302 (PA) which performs an intersection 402 of partially striped cell disk segments 406 (IPSCS) | |
| 700b | diagram showing an intersection 402 of partially striped cell disk segments 406 (IPSCS) needed for an explanation of said flowchart 700a | |
| 800a | flowchart showing a positioning algorithm 302 (PA) which performs an intersection 402 of cell disk rings 412 (IR) | |
| 800b | diagram showing an intersection 402 of cell disk rings 412 (IR) needed for an explanation of said flowchart 800a | |
| 900a | flowchart showing a positioning algorithm 302 (PA) which performs an intersection 402 of cell disk rings 412 with cell disk segments 406 (IRCS) | |
| 900b | diagram showing an intersection 402 of cell disk rings 412 with cell disk segments 406 (IRCS) needed for an explanation of said flowchart 900a | |
| 1000a | flowchart showing a positioning algorithm 302 (PA) which performs an intersection 402 of a serving cell disk segment 406 with a circle around a triangulated position (ICC) | |
| 1000b | diagram showing an intersection 402 of a serving cell disk segment 406 with a circle around a triangulated position (ICC) needed for an explanation of said flowchart 1000a | |
| 1002 | triangulation | |
| 1004 | widening | |
| 1100a | flowchart showing a positioning algorithm 302 (PA) which performs an intersection 402 of a (striped) serving cell disk segment 406 with a circle around a triangulated position (ISSCC) | |
| 1100b | diagram showing an intersection 402 of a (striped) serving cell disk segment 406 with a circle around a triangulated position (ISSCC) needed for an explanation of said flowchart 1100a | |
| 1200a | flowchart showing a positioning algorithm 302 (PA) which performs an intersection 402 of a cell disk ring 412 with a circle around a triangulated position (ICRC) | |
| 1200b | diagram showing an intersection 402 of a cell disk ring 412 with a circle around a triangulated position (ICRC) needed for an explanation of said flowchart 1200a | |
| 1300 | five possible roles of the involved components 1302, 1304, 1306, 1308 and 1310 and the exchanged data between said components in a business model based on an embodiment of the underlying invention | |
| 1302 | terminal user (TU) | |
| 1304 | mobile network provider (MNP) | |
| 1306 | cell database provider (CDP) | |
| 1308 | positioning computation provider (PCP) | |
| 1310 | position customer (PC) | |

## Claims

1. A positioning unit for a mobile device in a cell-based mobile network (100),
the positioning unit computing the position of the mobile device taking into account network characteristics received from a cell database (206) and data received from radio cells (102) of the network, wherein the positioning unit is designed to
- use the area of a serving cell as a basis, and
- enhancing the accuracy of the calculation of the current position using signal strenghts of at least one further radio cell, and
- disregard signals from radio cells having extreme signal strenghts.

2. A positioning unit according to claim 1,
**characterized in that**
it is designed to enhance the accuracy of the calculation of the current position by taking into account results from a prior position calculation.

3. A positioning unit according to anyone of claims 1 or 2,
**characterized in that**
it is designed to enhance the accuracy of the calculation of the current position by using more than one mobile network if available.

4. A positioning unit according to anyone of the preceding claims,
**characterized in that**
it is designed to enhance the accuracy of the calculation of the current position by taking into account correction signals of stationary mobile phones.

5. A mobile device comprising a positioning unit according to anyone of the preceding claims.

6. A method for calculating the current position of a mobile device in a cell-based mobile network (100),
the method comprising the following steps:
- computing the position by taking into account network characteristics received from a cell database (206) and data received from radio cells (102) of the network, wherein
- the area of a serving cell is used as a basis,
- the accuracy of the calculation of the current position is enhanced using signal strenghts of at least one further radio cell, and
- signals from radio cells having extreme signal strenghts are disregarded.

7. A method according to claim 6,
**characterized in that**
the accuracy of the calculation of the current position is enhanced by taking into account results from a prior position calculation.

8. A method according to anyone of claims 6 or 7,
**characterized in that**
the accuracy of the calculation of the current position is enhanced by using more than one mobile network if available.

9. A method according to anyone of claims 6 to 8,
**characterized in that**
the accuracy of the calculation of the current position is enhanced by taking into account correction signals of stationary mobile phones.

## Amended claims

Statement under Art. 19.1 PCT
Page 12, lines 5 - 7 and page 20, lines 16 - 18 of the description as originally filed disclose a positioning unit, which *"computes the position of the SU 204 by taking the account the data from the SU 204 and from the CDB 206, thereby using exchangeable positioning algorithms 302 (PA). The PU extends the accuracy of this position by taking the data from the DU 210 into account. As a result, the position of the SU 204 is given to the CU 208 ". In this respect, the sensing unit SU 204 "measures mobile network data received from some cells 102 of the mobile network 100. It sends these data to the PU 202. In the GSM case, such data can include the cell identity (CI) of the serving cell 102 and its Broadcast Control Channel (BCCH), a list of neighbored cells 102 and there BCCHs, and the reception levels of these BCCHs. As the SU 204, a normal mobile device 106 can be used that measures these values into terns them via a data connection"* (page 10, lines 15 - 23 of the description).

*"To calculate the position, the positioning system 200 uses a cell data base 206 that contains various data about the used GSM network 100, e.g. the CI of a cell 102, the geographic area where the cell 102 is located, the geographic location of the cell antennas 104 in the mobile network 100, the transmitter power of the cell antennas 104, etc. There might be entries for different cells 102, belonging to different mobile networks 100. The PU 202 can access the CDB, especially those parts that relate to the received cells 102. In the GSM case, often the CI of these cells 102 is needed"* (page 10, lines 25 - 35 of the description).

Therefore, the description as originally filed discloses a positioning unit for a mobile device in a cell-based mobile network, the positioning unit computing the position of the mobile device by taking into account network characteristics received from a cell database and data received from radio cells of the network.

According to page 12, lines 16 - 18, the positioning algorithms *"use the geographic area covered by the serving cell 102, and reduce this area by taking into account other measured mobile network data".*

In consequence, the description as originally filed discloses that the positioning unit is designed to use the area of a serving cell as a basis.

According to page 10, lines 1 - 7, 15 - 21 and page 15, lines 9, 10 of the description as originally filed, *"a mobile device 106 is able to receive signals from a number of different cells 102. There are channels for these cells 102 which send signals with a constant power. As a mobile device 106 is able to measure the received power, it then knows the difference in power between the sent in the received signal".*

Furthermore, the sensing unit *"measures mobile network data received from some cells 102 of the mobile network 100. It sends these data to the PU 202. In the GSM case, such data can include the cell identity (CI) of the serving cell 102 and its Broadcast Control Channel (BCCH), a list of neighbored cells 102 and their BCCHs, and the reception levels of these BCCHs*".

Accordingly, the description as originally filed discloses as a positioning unit which is designed to enhance the accuracy of the calculation of the current position by using signal strengths of at least one further radio cell. (see embodiments described on page 15, lines 9, 10, page 16, lines 12 - 22 and 30 - 33, page 17, lines 1 - 3, 12 - 25, page 18, lines 1 - 10, 21 - 24, page 19, lines 1 - 7, 20 - 26 of the description and figures 6 - 12 as originally filed).

Moreover, page 12, lines 25 - 30 of the description as originally filed disclose that *"Signals of cells 102, whose signals are received at a too extreme level, are not regarded: Signals of cells 102 that have a maximum or minimum level, often have a stronger or weaker signal, respectively, than values which can be indicated. Therefore, such values are not taken into account when considering the reception levels of cells 102*".

Thus, the application as originally filed discloses a positioning unit which is designed to disregard signals from radio cells having extreme signal strengths.

Summarizing, all features of independent claims 1 and 6 as filed on July 18, 2003 directly and unambiguously are disclosed in the application as originally filed.

Page 12, line 31 - page 13, line 2 of the description as originally filed disclose that *"if a new positioning attempt is made and the new area is computed that contains the position of a mobile device 106, this area can be reduced in some situations by intersecting that area with the one computed in the last positioning attempt".*

In consequence, the description as originally filed directly and unambiguously discloses a positioning unit which is designed to enhance the accuracy of the calculation of the current position by taking into account results from a prior position calculation and thus the features of dependent claims 2 and 7 as filed on July 18, 2003.

Page 13, lines 4 - 8 of the description as originally filed disclose the *"usage of cell data of more than one mobile network 100: Normally, there is more than one mobile network 100 at one place. To complete the usage of cell data of one mobile network 100, cell data of other mobile networks 100 can additionally be used".*

Accordingly, the application as originally filed directly and unambiguously discloses a positioning unit which is designed to enhance the accuracy of the calculation of the current position by using more than one mobile network if available and thus the features of dependent claims 3 and 8 as filed on July 18, 2003.

On page 12, lines 8 - 10 of the description as originally filed it is disclosed that the positioning unit *"extends the accuracy of the position by taking the data from the DU 210 into account".* As it is discussed on page 11, lines 29 - 34, the *"DU 210 requests the measured mobile network data and the known geographic position from at least one SMP 106"* (*"Stationary Mobile Phone",* page 5, line 27).

Consequently, the application as originally filed directly and unambiguously discloses that the positioning unit is designed to enhance the accuracy of the calculation of the current position by taking into account correction signals of stationary mobile phones and thus the features of dependent claims 4 and 9 as filed on July 18, 2003.

Dependent claim 5 corresponds to dependent claim 20 as originally filed and thus has been disclosed in the application as originally filed.

In case the examining division still is of the opinion that the claims as filed on July 18, 2003 violate article 123 (2) EPC, oral proceedings are requested to avoid an immediate refusal of the application.
